# EUROPÄISCHE PATENTANMELDUNG

(11) **EP 0 937 414 A2**
(43) Veröffentlichungstag der Anmeldung: **25.08.1999**
(21) Anmeldenummer: 99102255.9
(22) Anmeldetag: 05.02.1999
(51) Int. Cl.: A23P 1/14, A23L 1/18

(54) **Vorrichtung zum Puffen von teilchenförmigem Gut**

(30) Priorität: 19.02.1998 DE 19806950
(71) Anmelder: Bichsel, Rudolf, 68500 Guebwiller (FR)
(72) Erfinder: Bichsel, Rudolf, 68500 Guebwiller (FR)
(74) Vertreter: Weller, Wolfgang, Dr.rer.nat.

(57) **Zusammenfassung**

Eine Vorrichtung (50) zum Puffen von teilchenförmigem Gut, insbesondere von Getreide und Hülsenfrüchten, weist einen Puffing-Reaktor (54) auf, in dem das Gut mit Druck und Temperatur beaufschlagbar ist, ferner ist ein Öffnungsmechanismus (60) zum raschen Öffnen des Austragendes (58) des Puffing-Reaktors (54) vorgesehen, wobei das Austragende (58) mit einer Expansionskammer (14) in Verbindung steht. Zur Reduzierung der Bulkigkeit der Expansionskammer wird vorgeschlagen, daß diese einen ersten, sehr schlanken, etwa rohrförmigen Abschnitt (68) aufweist, dessen Länge und dessen Durchmesser so bemessen sind, daß sich darin ein laminarer Gutkegelstrom (78) des aus dem Austragende (58) ausschießenden Gutstromes (76) entwickeln kann, daß spätestens in dem Bereich, in dem der laminare Gutkegelstrom (78) in eine turbulente Strömung (80) übergeht, der rohrförmige Abschnitt (68) in einen volumengroßen Behälter (18) mündet, der eine Druckentspannung auf Normaldruck ermöglicht.

## Beschreibung

Die Erfindung betrifft eine Vorrichtung zum Puffen von teilchenförmigem Gut, insbesondere von Getreide und Hülsenfrüchten, mit einem Puffing-Reaktor, in dem das Gut mit Druck und Temperatur beaufschlagbar ist, mit einem Öffnungsmechanismus zum raschen Öffnen eines Austragendes des Reaktors, wobei das Austragende mit einer Expansionskammer in Verbindung steht, in die das Gut hineinschießt.

Eine derartige Vorrichtung ist aus der DE 195 21 167 A1 bekannt.

Unter Puffen versteht man ein Aufschlußverfahren für teilchenförmiges Gut, insbesondere von Getreide und Hülsenfrüchten, die unter Überdruck gedämpft und nach schlagartigem Aufheben des Druckes zu lockeren Massen aufgebläht werden. Die Produkte kommen z.B. als Puffweizen, Puffreis, Puffmais, gepuffte Erbsen, z.B. als Cerealien, in den Handel. Es ist auch möglich, anderes körniges Gut, wie bspw. Tabak, so zu behandeln.

In dem eigentlichen Puffing-Reaktor wird das Gut mit heißem Sattdampf oder überhitztem Dampf auf eine Temperatur im Bereich zwischen 200 und 300°C gebracht und dabei mit einem Druck von zumindest 5 bar, gebräuchlich sind auch Drücke im Bereich von 12 bis 20 bar, beaufschlagt.

Das Austragende des Puffing-Reaktors ist mit einem Öffnungsmechanismus zum raschen Öffnen des Autragendes des Reaktors versehen, meist in Form eines Kugelventils. Das Austragende des Reaktors steht mit einer Expansionskammer in Verbindung, in die das Gut hineingeschossen wird. Die im Gut enthaltende Feuchtigkeit kann durch den schlagartigen Druckabbau entsprechend schlagartig verdampfen, wobei das Gut aufgebläht wird.

Es sind unterschiedliche Konstruktionen von Puffing-Reaktoren und Expansionskammern bekannt, d.h. es gibt stehende und liegende Puffing-Reaktoren und Expansionskammern.

Bei der eingangs genannten Vorrichtung ist der Puffing-Reaktor als stehender Reaktor ausgebildet, der über eine Leitung mit einer 90°-Krümmung mit einer liegenden Zylindrischen, sich drehenden Expansionskammer verbunden ist.

Die Expansionskammer ist sehr groß ausgebildet, zum einen um einen Druckabbau auf Normaldruck zu ermöglichen, wozu ein ausreichend großes Expansionskammervolumen notwendig ist, und außerdem muß dem aus dem Puffing-Reaktor ausschießenden Gut eine genügend lange Wegstrecke zur Verfügung gestellt werden, bis dessen kinetische Energie abgebaut ist, das Gut gebläht ist, und es aufgrund der Schwerkraft auf den Boden der Expansionskammer absinken und dort als gepufftes Produkt gesammelt und ausgetragen werden kann. Dadurch sollen Agglomerate von noch nicht vollständig getrockneten und expandierten oder auch Agglomerate von gerade expandierenden Gutteilchen vermieden werden, denn Ziel ist, ein möglichst einheitliches einzelteiliges und gleichmäßig gut gepufftes Produkt zu erhalten.

Aufgrund dieser Erfordernisse wird die Expansionskammer üblicherweise sehr großvolumig ausgestaltet und bildet bei der Gesamtanlage das größte, bulkigste und sperrigste Bauteil.

Bei Puffing-Reaktoren mit hohem Durchsatz und kurzen Taktzeiten müssen dementsprechend großvolumige Expansionskammern gebaut werden, die, wenn diese noch drehbar sind wie bei der eingangs genannten Vorrichtung, erhebliche mechanische Aufwendungen notwendig machen.

Aus der US 4 417 505 ist eine Vorrichtung zum Herstellen von Popcorn bekannt, bei der das aufgeblähte Popcorn über ein Rohr in ein Silo gesaugt wird.

Es ist Aufgabe der vorliegenden Erfindung, eine Vorrichtung der eingangs genannten Art dahingehend zu verbessern, daß die Bulkigkeit der Expansionskammer, somit die baulichen Aufwendungen, verringert werden.

Erfindungsgemäß wird die Aufgabe dadurch gelöst, daß die Expansionskammer einen ersten, sehr schlanken, etwa rohrförmigen Ab-schnitt aufweist, dessen Länge und dessen Durchmesser so bemessen sind, daß sich darin ein laminarer Gutkegelstrom des aus dem Austragende ausschießenden Gutes entwickeln kann, und daß spätestens in dem Bereich, in dem der laminare Gutkegelstrom in eine turbulente Strömung übergeht, der sehr schlanke, rohrförmige Abschnitt in einen volumengroßen Behälter mündet, der eine Druckentspannung auf Normaldruck ermöglicht.

Beim Betrieb der eingangs genannten Vorrichtung entsprechend der DE 195 21 167 A1 wurde durch intensive Beobachtungen der Vorgänge in der Expansionskammer festgestellt, daß der Gutstrom über eine weite Strecke als relativ dünner kegelförmiger Gutstrahl in die Expansionskammer einschießt und erst in einem hinteren Endabschnitt das geblähte Produkt auf den Boden der Expansionskammer absinkt.

Weitere Untersuchungen haben ergeben, daß in dem anfänglichen Gutkegelstrom eine im wesentlichen laminare Strömung vorherrscht, in der sich das sich aufblähende Gut anfänglich noch mit sehr hoher Geschwindigkeit bewegt, die nach und nach verlangsamt wird, und daß der laminare Gutkegelstrom über einen relativ definierten Übergangsbereich in eine turbulente Strömung übergeht.

Weitere Untersuchungen haben nun ergeben, daß bei Erreichen des Übergangsbereiches von der laminaren in die turbulente Strömung bereits etwa das gesamte Gut aufgebläht ist.

Ferner wurde festgestellt, daß der Kegelwinkel relativ klein ist und in Abhängigkeit von der Art des teilchenförmigen Guts kaum variiert.

Daher wird nun vorgeschlagen, die Expansionskammer in einen ersten, etwa rohrförmigen Abschnitt zu unterteilen, dessen Länge und dessen Durchmesser so bemessen sind, daß sich darin ein laminarer Gutkegelstrom des aus dem Austragende ausschießenden Guts entwickeln kann. In dem Bereich, in dem der laminare Gutkegelstrom in eine turbulente Strömung übergeht, mündet der rohrförmige Abschnitt in einen Behälter, der so bemessen ist, daß eine Druckentspannung auf Normaldruck ermöglicht ist.

Das bedeutet, es ist möglich, die Expansionskammer in einen ersten relativ dünnen rohrförmigen Abschnitt zu unterteilen, in dem das expandierende Gut sich in Form eines laminaren Gutkegelstromes bewegt, so daß dieser Abschnitt sehr schlank und somit wenig bulkig ausgebildet werden kann. Das zur Druckentspannung auf Normaldruck notwendige Volumen wird durch den Behälter am Ende des ersten rohrförmigen Abschnittes zur Verfügung gestellt, der sich aber nun nicht mehr zwangsweise sehr lange in Bewegungsrichtung des Gutes erstrecken muß, da das Gut beim Eintritt in den Behälter in die turbulente verwirbelte Strömung übergeht, so daß keine lange Flugstrecke des zwischenzeitlich geblähten Produktes mehr erfolgt, sondern dieses alsbald in dem Behälter in Schwerkraftrichtung absinkt. Es ist daher möglich, diesen Behälter als in Bewegungsrichtung der Produkte relativ kurzes Gebilde auszubilden, das bspw. als entsprechend volumengroßer höher stehender Behälter ausgebildet werden kann.

Die Expansionskammer ist nunmehr in einen ersten dünnen, etwa rohrförmigen Abschnitt und in einen zweiten relativ kurzen, dafür entsprechend hohen Abschnitt aufgeteilt.

Daraus resultiert insgesamt eine wesentlich wenig bulkig bauende Expansionskammer, die auch bei sehr großen und durchsatzstarken Puffing-Reaktoren insgesamt gesehen weniger aufwendig ist.

Somit wird die Aufgabe vollkommen gelöst.

In einer weiteren Ausgestaltung der Erfindung entspricht der Durchmesser des rohrförmigen Abschnittes am Übertritt zum großvolumigen Behälter etwa dem 0,6- bis 3-fachen des Durchmessers des laminaren Gutkegelstromes im Übergangsbereich von der laminaren zur turbulenten Strömung.

In diesen Bemessungsgrenzen können die gängigsten Gutarten mit einem guten Ergebnis behandelt werden, wobei bei zunehmenden Durchmesser des rohrförmigen Abschnittes ein entsprechendes größeres Volumen zur Druckentspannung bereits in dem ersten rohrförmigen Abschnitt zur Verfügung steht, so daß dann der Behälter, in dem eine Druckentspannung bis auf Normaldruck erfolgt, entsprechend kleiner ausgebildet werden kann.

Im Bereich der Untergrenze, also im Bereich des 0,6-fachen des Durchmessers des laminaren Gutkegelstromes, kann sich dieser nicht in voller Breite entfalten, wird also am Ende etwas fokussiert, was bei manchen relativ festen Gutarten durchaus möglich ist. Beim Unterschreiten dieser Grenze besteht die Gefahr von Verstopfungen des rohrförmigen Abschnittes.

In weiteren Ausgestaltungen liegt der Durchmesser des rohrförmigen Abschnittes am Übertritt zum Behälter im Bereich zwischen dem 0,7- bis 2-fachen, dem 0,9- bis 1,4-fachen oder, in Optimierung bei etwa genau dem Durchmesser des laminaren Gutkegelstromes im Übergangsbereich von der laminaren zur turbulenten Strömung.

Innerhalb dieser Bemessungsgrenzen kann sich der Gutkegelstrom immer mehr entsprechend seiner idealen Geometrie entwickeln, so daß, insbesondere bei empfindlichem Gut, dieses mit der Innenwand des ersten rohrförmigen Abschnittes nicht oder nur am Ende der Flugbahn im ersten Abschnitt in Berührung tritt.

In einer weiteren Ausgestaltung der Erfindung entspricht die Länge des rohrförmigen Abschnittes maximal der Länge des laminaren Gutkegelstromes.

Diese Maßnahme hat den Vorteil, daß im rohrförmigen Abschnitt ausschließlich der laminare Gutkegelstrom vorhanden ist und keine turbulente Strömung stattfindet, die zu Verstopfungen oder zu Rückstau im rohrförmigen Abschnitt führen könnte.

Es ist unschädlich, wenn sich der Endbereich des laminaren Gutkegelstromes etwas in den Behälter hinein erstreckt, insbesondere dann, wenn sich die Geschwindigkeit im Bereich des Endes des Kegels schon stark verringert hat und der Gutstrom dann alsbald in die turbulente Strömung übergeht. Dann kann es zwar sein, daß noch relativ viele Teilchen gegen die hintere Wand des Behälters prallen, die Auftreffgeschwindigkeit ist aber dann schon so gering, daß dadurch keine Beschädigungen am Produkt auftreten.

In einer weiteren Ausgestaltung der Erfindung ist der rohrförmige Abschnitt als zylindrisches Rohr ausgebildet, dessen Durchmesser zumindest dem 2-fachen des Durchmessers des Austragendes des Puffing-Reaktors entspricht.

Die Ausbildung als zylindrisches Rohr ist fertigungstechnisch sehr einfach und, da sehr kleine Kegelöffnungswinkel beobachtet wurden, kann mit dieser Bemessung ein sehr schlanker erster rohrförmiger Abschnitt ausgebildet werden, in dem sich dennoch ein großer Teil des gesamten laminaren Gutkegelstromes entwickeln kann.

In einer weiteren Ausgestaltung der Erfindung ist der Puffing-Reaktor ein stehender Reaktor, der rohrförmige Abschnitt der Expansionskammer verläuft etwa horizontal und steht über ein gekrümmtes Rohr mit dem Austragende des Puffing-Reaktors in Verbindung.

Diese Ausgestaltung ist nun besonders raumsparend und günstig und beruht auf der Erkenntnis, daß das Gut über eine Krümmung in die Expansionskammer eingeschossen werden kann, die schon den Durchmesser des rohrförmigen Abschnittes aufweisen kann, da die unmittelbar am Auslaß herrschenden Druckverhältnisse einen scharf gebündelten, etwa mittig verlaufenden Gutstrahl erzeugen.

In einer weiteren Ausgestaltung der Erfindung ist der Behälter als stehender Dom ausgebildet.

Diese Maßnahme hat den Vorteil, daß bei einer relativ schlanken Bauweise eine insgesamt wenig ausladende Expansionskammer möglich ist. Insbesondere bei stehenden Puffing-Reaktoren kann davon abseits stehend der Dom ausgebildet sein, der über den relativ dünnen rohrförmigen Abschnitt der Expansionskammer verbunden ist. So kann dann der Raum zwischen dem Dom und dem Puffing-Reaktor für andere Bauteile genutzt werden.

In einer weiteren Ausgestaltung der Erfindung ist der Dom als stehender Hohlzylinder ausgebildet.

Diese Maßnahme hat den Vorteil, daß ein Hohlzylinder ein fertigungstechnisch sehr einfach herstellbares und stabiles Bauteil ist, das ohne große Abstützmaßnahmen auf einem Grund abgestellt werden kann.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend anhand einiger ausgewählter Ausführungsbeispiele in Zusammenhang mit den Zeichnungen näher beschrieben und erläutert. Es zeigen:
- Fig. 1: stark schematisiert einen Längsschnitt einer Expansionskammer zur Erläuterung der prinzipiellen Funktionsweise und
- Fig. 2: eine Seitenansicht einer Vorrichtung mit einem stehenden Puffing-Reaktor und einer daran anschließenden Expansionskammer mit etwa horizontal ausgerichtetem rohrförmigem Abschnitt und stehendem Dom.

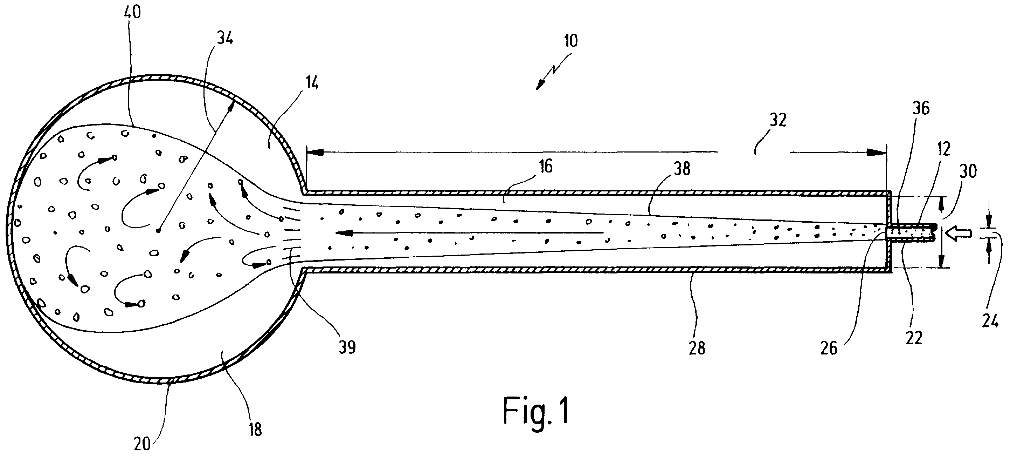

Eine in Fig. 1 dargestellte Vorrichtung zum Puffen von teilchenförmigem Gut ist in ihrer Gesamtheit mit der Bezugsziffer 10 versehen.

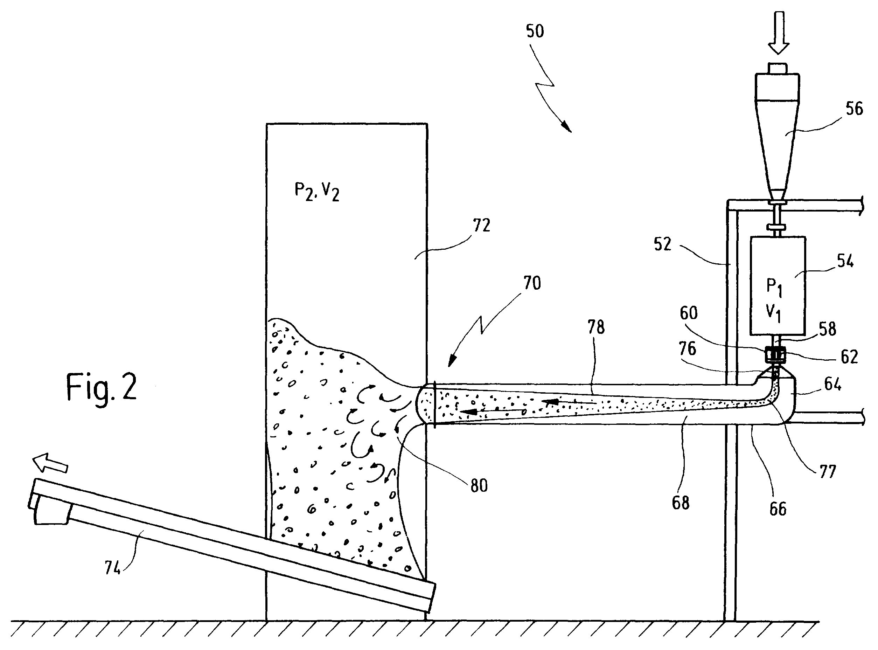

Der Übersichtlichkeit halber ist der Puffing-Reaktor nicht näher dargestellt, in dem das teilchenförmige Gut mit Druck und Temperatur, bspw. mit einem Druck von 16 bar oder einer Temperatur von ca. 200°C beaufschlagt wird. Dies wird näher in Zusammenhang mit Fig. 2 beschrieben.

Ein Austragende des Puffing-Reaktors 12 ist mit einer Expansionskammer 14 verbunden.

Die Expansionskammer 14 weist einen rohrförmigen Abschnitt 16 auf, der in einem Behälter 18 mündet. Der Behälter 18 ist als stehender Dom 20 ausgebildet.

Eine Leitung 22 verbindet das Austragende 12 des PuffingReaktors mit dem Einlaß des rohrförmigen Abschnittes 16.

Die Leitung mündet in eine Eintrittsöffnung 26, deren Durchmesser 24 etwa 50 mm beträgt.

Der rohrförmige Abschnitt 16 ist als zylindrisches Rohr 28 ausgebildet, dessen Durchmesser 30 bei etwa 500 mm liegt. Das Rohr 28 weist eine Länge 32 von 4 m auf und mündet etwa auf halber Höhe des Doms 20 in diesem. Der Dom hat etwa eine Höhe von 4,5 m und einen Radius 34 von ca. 1 m.

Im Betrieb schießt, nach schlagartigem Öffnen des Austragendes des Puffing-Reaktors, das Gut in Form eines kompakten Gutstromes 36 über die Leitung 22 in den rohrförmigen Abschnitt 16 der Expansionskammer 14.

Dort bildet sich ein laminarer Gutkegelstrom 38 aus, in dem die Gutteilchen laminar von der Eintrittsöffnung 26 in Richtung Dom 20 strömen. Über einen relativ scharf begrenzten und definierten Bereich 39 geht der laminare Gutkegelstrom 38 in eine turbulente Strömung 40 über.

Die Dimension des in Fig. 1 dargestellten Ausführungsbeispiels des rohrförmigen Abschnittes 16 ist nun so gewählt, daß die Länge 32 des Rohres 28 in etwa der Länge des laminaren Gutkegelstromes 38 entspricht. Der Durchmesser 30 des rohrförmigen Abschnittes 16 ist so gewählt, daß sich bis zu diesem Ende gerade der laminare Gutkegelstrom 38 voll entwickeln kann, also dieser Durchmesser 30 entspricht dem Durchmesser des Kegelbodens im Bereich 39, indem dieser von einer laminaren in eine turbulente Strömung 40 übergeht.

Durch die turbulente Strömung 40 entsteht ein allseits ballonartiger aufgeweiteter Produktstrom, der sich verwirbelnd im Inneren des Doms 20 bewegen kann, wie das in Fig. 1 durch die Strömungspfeile angedeutet ist. Die Fluggeschwindigkeit hat so stark abgenommen, daß zahlreiche Teile sich schon erheblich abgesenkt haben, bis sie die dem rohrförmigen Abschnitt 16 gegenüberliegende Wandung des Doms 20 erreicht haben, so daß diese Teilchen nicht durch den Aufprall beschädigt werden.

Diese Strömungscharakteristik verändert sich nicht wesentlich, wenn man den Durchmesser 30 des Rohres 28 vergrößert oder etwas verkürzt, wird das Rohr 28 allerdings zu stark verkürzt, besteht die Gefahr, daß die Gutpartikel mit zu hoher Geschwindigkeit auf die hintere Domwand treffen. Ein Verkleinern des Durchmessers 30 des Rohres 28 ist bis zu einem bestimmten Maß möglich, dadurch wird der Gutkegelstrom 38 am Ende etwas eingeengt, wodurch eine gewisse Fokussierung erfolgt.

Diese Fokussierung ist dann unkritisch, wenn es sich um ein relativ unempfindliches Gut wie bspw. geblähter Weizen handelt und die Geschwindigkeit des Gutes in diesem Bereich schon so weit abgenommen hat, daß nicht allzu viele Teile in Richtung Mitte des Rohres 28 zurückgeschleudert werden und dadurch ein sperrender Pfropfen entsteht.

Man kann dem dadurch Rechnung tragen, daß man den zylindrischen Abschnitt des rohrförmigen Abschnittes 16 kürzt und im Übergangsbereich zum Dom 20 einen trompeten- oder kegelstumpfartig aufgeweiteten Abschnitt zwischenschaltet.

Das Produkt kann theoretisch über einen liegenden Puffing-Reaktor über die dann ebenfalls entsprechend horizontal ausgerichtete Leitung 22 zugeführt werden, dadurch würde aber die Vorrichtung relativ lang bauen.

In Fig. 2 ist ein Ausführungsbeispiel dargestellt, in dem eine Vorrichtung 50 einen an einem Gestell 52 montierten stehenden Puffing-Reaktor 54 aufweist.

Am oberen Ende des Puffing-Reaktors 54 ist ein Zuführtrichter 56 angeordnet, über den das zu behandelnde Gut, meist in einem bestimmten vorbehandelten konditionierten Zustand, zugeführt wird, wie das durch einen Pfeil angedeutet ist.

Das untere Austragende 58 des Puffing-Reaktors 54 ist mit einem Mechanismus 60 zum raschen Öffnen des Puffing-Reaktors 54 versehen, der ein Kugelventil 62 aufweist.

Das Austragende 58 geht über ein gekrümmtes Rohr 64 in ein horizontales Rohr 66 über, die zusammen den rohrförmigen Ab-schnitt 68 einer Expansionskammer 70 bilden. Der rohrförmige Abschnitt 68 mündet, wie zuvor beschrieben, in einem Dom 72, in dem das Produkt aufgrund der Schwerkraft Richtung Boden abfällt und dort von einer Austragvorrichtung 74 aufgenommen und gesammelt wird, über die das endfertige gepuffte Produkt ausgetragen werden kann, wie das durch einen Pfeil angedeutet ist.

Im Betrieb wird das Gut im Puffing-Reaktor 54 mit einem Druck p₁ von etwa 16 bar und einer Temperatur von etwa 200°C beaufschlagt, das Volumen V₁ des Puffing-Reaktors beträgt ca. 50 l. Nach Öffnen des Kugelventils 62 schießt das Gut als Gutstrom 76 aus dem Austragende 58 heraus und tritt über das gekrümmte Rohr 64 in einem gekrümmten Strahl mittig zentriert in das horizontale Rohr 66 ein, dort entwickelt sich ein laminarer Gutkegelstrom 78.

Es wurde festgestellt, daß der Gutstrom tatsächlich in der dort angedeuteten Krümmung 77 umgelenkt wird, ohne daß wesentliche Teile auf das dem Kugelventil 62 gegenüberliegende Ende des gekrümmten Rohres 64 prallen.

Dies kann so erklärt werden, daß, von der Seite des Doms 72 her gesehen, ein starker Unterdruck gegenüber dem Druck im Puffing-Reaktor 54 herrscht, der dafür sorgt, daß das unter hohem Druck stehende Medium zentriert längs der Krümmung 77 strömt.

Auch hier ist die Bemaßung des rohrförmigen Abschnittes 68 so, daß sich der gesamte laminare Gutkegelstrom 78 entwickeln kann und beim Eintritt in den Dom 72 die turbulente Strömung 80 erfolgt.

Im Dom 72 herrscht der Umgebungsdruck p₂. Im Dom sind Entlüftungsöffnungen zum Ausgleich vorgesehen.

Der Dom 72 ist als konstruktiv einfacher metallischer Hohlzylinder ausgebildet, der auf einem Grund abgestellt ist. Die Rohre 64 und 66 sind aus druckfesten metallischen Materialien hergestellt und beidseitig mit den Anschlußaggregaten, also dem Mechanismus 60 bzw. der Einlaßöffnung am Dom fest verbunden.

Diese konstruktiv einfachen Bauteile können kostengünstig hergestellt und erstellt werden, und es kann flexibel an variierende Bedingungen im Puffing-Reaktor 54 angepaßt werden, indem bspw. entsprechend dickere, dünnere, längere oder kürzere Rohre zwischen Puffing-Reaktor und Dom 72 geschaltet werden.

## Patentansprüche

1. Vorrichtung (10, 50) zum Puffen von teilchenförmigem Gut, insbesondere von Getreide und Hülsenfrüchten, mit einem Puffing-Reaktor (54), in dem das Gut mit Druck und Temperatur beaufschlagbar ist, mit einem Öffnungsmechanismus (60) zum raschen Öffnen eines Austragendes (12, 58) des Puffing-Reaktors (54), wobei das Austragende (12, 58) mit einer Expansionskammer (14, 70) in Verbindung steht, dadurch gekennzeichnet, daß die Expansionskammer (14, 70) einen ersten, sehr schlanken, etwa rohrförmigen Abschnitt (16, 68) aufweist, dessen Länge (32) und dessen Durchmesser (30) so bemessen ist, daß sich darin ein laminarer Gutkegelstrom (38, 78) des aus dem Austragende (12, 58) ausschießenden Gutstromes (36, 76) entwickeln kann, daß spätestens in dem Bereich (39), in dem der laminare Gutkegelstrom (38, 78) in eine turbulente Strömung (40, 80) übergeht, der sehr schlanke, rohrförmige Abschnitt (16, 68) in einen volumengroßen Behälter (18) mündet, der eine Druckentspannung auf Normaldruck ermöglicht.

2. Vorrichtung nach Anspruch 1, dadurch gekennzeichnet, daß der Durchmesser (30) des rohrförmigen Abschnittes (16) am Übertritt zum Behälter (18) dem 0,6- bis 3-fachen des Durchmessers des laminaren Gutkegelstromes (38) im Übergangsbereich (39) von der laminaren zur turbulenten Strömung (40) entspricht.

3. Vorrichtung nach Anspruch 2, dadurch gekennzeichnet, daß der Durchmesser (30) des rohrförmigen Abschnittes (16) am Übertritt zum Behälter (18) dem 0,7- bis 2-fachen des Durchmessers des laminaren Gutkegelstromes (38) im Übergangsbereich (39) von der laminaren zur turbulenten Strömung (40) entspricht.

4. Vorrichtung nach Anspruch 2, dadurch gekennzeichnet, daß der Durchmesser (30) des rohrförmigen Abschnittes (16) am Übertritt zum Behälter (18) dem 0,9- bis 1,4-fachen des Durchmessers des laminaren Gutkegelstromes (38) im Übergangsbereich (39) von der laminaren zur turbulenten Strömung (40) entspricht.

5. Vorrichtung nach Anspruch 1, dadurch gekennzeichnet, daß der Durchmesser (30) des rohrförmigen Abschnittes (16) am Übertritt zum Behälter (18) etwa dem Durchmesser des laminaren Gutkegelstromes (38) im Übergangsbereich (39) von der laminaren zur turbulenten Strömung (40) entspricht.

6. Vorrichtung nach einem der Ansprüche 1 bis 5, dadurch gekennzeichnet, daß die Länge (32) des rohrförmigen Abschnittes (16, 68) maximal der Länge des laminaren Gutkegelstromes (38) entspricht.

7. Vorrichtung nach einem der Ansprüche 1 bis 6, dadurch gekennzeichnet, daß der rohrförmige Abschnitt (16, 68) als zylindrisches Rohr (28, 64, 66) ausgebildet ist, dessen Durchmesser (30) zumindest dem 2-fachen des Durchmessers (24) des Austragendes (58) des Puffing-Reaktors (54) entspricht.

8. Vorrichtung nach einem der Ansprüche 1 bis 7, dadurch gekennzeichnet, daß der Puffing-Reaktor (54) ein stehender Reaktor ist, daß der rohrförmige Abschnitt (68) etwa horizontal verläuft und über ein gekrümmtes Rohr (64) mit dem Austragende (58) des Puffing-Reaktors (54) in Verbindung steht.

9. Vorrichtung nach einem der Ansprüche 1 bis 8, dadurch gekennzeichnet, daß der Behälter (18) als stehender Dom (20) ausgebildet ist.

10. Vorrichtung nach Anspruch 9, dadurch gekennzeichnet, daß der Dom (20) als stehender Hohlzylinder ausgebildet ist.
